# EUROPÄISCHE PATENTSCHRIFT

(11) **EP 0 714 414 B1**
(45) Veröffentlichungstag und Bekanntmachung des Hinweises auf die Patenterteilung: **20.05.1998**
(21) Anmeldenummer: 94924853.8
(22) Anmeldetag: 08.08.1994
(51) Int. Cl.: C08F 2/06

(54) **VERFAHREN ZUR HERSTELLUNG VON ANIONISCH POLYMERISIERBAREN VINYLVERBINDUNGEN**
PROCESS FOR PREPARING ANIONICALLY POLYMERISABLE VINYL COMPOUNDS
PROCEDE DE PREPARATION DE COMPOSES VINYLE POLYMERISABLES PAR VOIE ANIONIQUE

(30) Priorität: 16.08.1993 DE 4327495
(43) Veröffentlichungstag der Anmeldung: 05.06.1996
(73) Patentinhaber: BASF AKTIENGESELLSCHAFT, 67056 Ludwigshafen (DE)
(72) Erfinder: BRANDSTETTER, Franz, D-67435 Neustadt (DE); GAUSEPOHL, Hermann, D-67112 Mutterstadt (DE); THIELE, Reiner, D-67663 Kaiserslautern (DE)
(86) Internationale Anmeldenummer: EP9402620
(87) Internationale Veröffentlichungsnummer: WO9505401

(56) Entgegenhaltungen:
- EP-A- 0 522 641
- US-A- 3 356 763
- US-A- 4 200 713
- US-A- 4 965 327

## Beschreibung

Die Erfindung betrifft ein Verfahren zur Polymerisation einer anionisch polymerisierbaren Verbindung, insbesondere zur Herstellung von glasklarem Polystyrol oder von Polybutadien.

Zum Stand der Technik werden genannt:

| | |
|---|---|
| EP 0 522 641 | US 3 954 894 |
| EP 0 176 611 | US 4 196 153 |
| EP 0 471 550 | US 4 200 713 |
| US 3 035 033 | US 4 205 016 |
| US 3 030 346 | US 4 883 846 |

In der US-Patentschrift 4 883 846 ist ein Verfahren zur anionischen Polymerisation von Styrol beschrieben. Danach wird Styrol in Ethylbenzol mit n-Butyllithium in einem Reaktor adiabatisch, d.h. ohne Wärmeabfuhr polymerisiert.

Da bekanntlich die anionische Polymerisation stets bis zum vollständigen Umsatz, d.h. Verbrauch des Styrols läuft, besteht der Nachteil dieses Verfahrens darin, daß man nur eine vergleichsweise geringe Styrolkonzentration anwenden kann, um die Endtemperatur nicht hoch ansteigen zu lassen. Eine zu hohe Endtemperatur führt zu einem thermischen Abbruch und damit zu unvollständiger Reaktion und unkontrollierter Molekulargewichtsverteilung. Niedrige Styrolkonzentrationen aber haben geringe Raumzeitausbeuten zur Folge.

Nach den Angaben der europäischen Patentschrift 522 641 kann man Styrol anionisch in einem Extruder polymerisieren, wobei die Monomerkonzentration im Zulauf > 50 % sein soll. Auf diese Weise erzielt man zwar eine relativ hohe Raumzeitausbeute. Das Molekulargewicht der Polymeren und damit die Eigenschaften der Endprodukte werden jedoch bei diesem Verfahren nicht nur vom Verhältnis des Initiators zum Monomeren, sondern auch von Verfahrensparametern wie z.B. der Drehzahl der Schnecke oder der Zulaufgeschwindigkeit des Monomeren bestimmt. Damit führen kleinste Änderungen der Verfahrensparameter zur Änderung der Produkteigenschaften und letztlich zu einer großen Spezifikationsbreite der Endprodukte.

In der europäischen Patentschrift 176 611 und der US-Patentschrift 3 035 033 sind sog. Schleifenreaktoren zur Herstellung von anionischem Polystyrol beschrieben. Dabei wird empfohlen, daß die Verweilzeit mindestens 1 - 3 Stunden beträgt bzw. daß das zirkulierende Volumen mindestens 15 mal und vorzugsweise 25 ml so groß ist wie das Zulaufvolumen. Der Nachteil dieses Verfahrens ist ebenfalls die geringe Raumzeitausbeute.

Aufgabe der Erfindung war es, die beschriebenen Nachteile zu vermeiden und ein wirtschaftliches Verfahren zur Herstellung von z.B. glasklarem Polystyrol oder Polybutadien durch anionische Polymerisation anzugeben.

Die Aufgabe wird gelöst durch ein kontinuierliches Verfahren zur anionischen Polymerisation von (co)polymerisierbaren Vinyl- bzw. Dien-Verbindungen, ausgewählt aus Styrol, α-Methylstyrol, Vinyltoluol, tert.-Butylstyrol und Butadien in Lösung und in einer als Strömungsrohr ausgebildeten Reaktionszone, die keine bewegten Teile enthält, unter Verwendung eines metallorganischen Initiators, bei dem erfindungsgemäß die Umsetzung im wesentlichen adiabatisch, d.h. ohne Wärmeaustausch mit der Umgebung vorgenommen und ein Druck gewählt wird, der ausreicht, um vorzeitiges Sieden des Gemisches zu vermeiden und eine ausreichende Durchsatzgeschwindigkeit zu erzielen und die Verweilzeit unter 5 Minuten liegt.

kontinuierliches Verfahren zur anionischen Polymerisation von (co)polymerisierbaren Vinyl- bzw. Dien-Verbindungen, ausgewählt aus Styrol, α-Methylstyrol, Vinyltoluol, tert.-Butylstyrol und Butadien in Lösung und in einer als Strömungsrohr ausgebildeten Reaktionszone unter Verwendung eines metallorganischen Initiators, wobei erfindungsgemäß die Reaktion im wesentlichen adiabatisch, d.h. ohne Wärmeaustausch mit der Umgebung abläuft, ein Druck gewählt wird, der ausreicht, um vorzeitiges Sieden des Gemisches zu vermeiden und eine ausreichende Durchsatzgeschwindigkeit zu erzielen, die Verweilzeit unter 5 Minuten liegt und die Reaktionszone keine bewegten Teile enthält.

Es können die für die anionische Polymerisation üblichen Lösungsmittel eingesetzt werden. Geeignet sind z.B. aliphatische, cycloaliphatische oder aromatische Kohlenwasserstoffe, die unter Reaktionsbedingungen flüssig sind und vorzugsweise 4 bis 12 Kohlenstoffatome enthalten. Beispiele hierfür sind Pentan, Cyclohexan, Methylcyclohexan, Toluol, Ethylbenzol oder Xylol.

Als Verbindungen, die die anionische Polymerisation auslösen (sog. Initiatoren) werden zum Beispiel Lithiumkohlenwasserstoffe wie Methyllithium, Ethyllithium, n- oder sec.-Butyllithium, Isopropyllithium, Cyclohexyllithium oder Phenyllithium verwendet. Besonders bevorzugt sind n-Butyl- oder sec.-Butyllithium.

Die Polymerisation läuft unter den für die anionische Polymerisation typischen Bedingungen ab, d.h. unter Luft- und Feuchtigkeitsausschluß bei einer Temperatur zwischen 20 und 200°C, bevorzugt zwischen 30 und 180°C. Das Molekulargewicht wird über das Molverhältnis von Initiator und Monomeren eingestellt.

Durch die erfindungsgemäße Art der Polymerisation werden Produkte mit enger Molekulargewichtsverteilung erhalten, d.h. der Quotient aus Gewichts- und Zahlenmittel des Molekulargewichts liegt zwischen 1 und 1,5.

Produkte mit breiterer und auch multimodaler Verteilung erhält man durch Zwischeneinspeisung des Initiators.

Die Polymerisation wird i.a. bis zu einem Umsatz von über 99,9 % geführt.

Das wesentliche Kennzeichen der Umsetzung besteht darin, daß sie sowohl adiabatisch wie kontinuierlich verläuft. Die Reaktionszone besteht aus einem Strömungsrohr, in dem sich eine Propfenströmung ausbildet. Das Strömungsrohr kann statische Mischer enthalten, um die axiale Durchmischung zu fördern. Geeignet sind sog. Kenics-Mischer oder SMX-Mischer der Fa. Sulzer. Am Eingang (Kopf) des Pfropfenstromreaktors wird eine Mischung aus gereinigtem und z.B. über Aluminiumoxid getrocknetem Lösungsmittel und destillierter Monomer-Verbindung eingespeist. Getrennt wird die Initiatorlösung zudosiert, um eine vorzeitige Reaktion zu vermeiden.

Die Endtemperatur der Polymerlösung ist durch die Konzentration der Monomeren in der Ausgangslösung festgelegt und wird so gesteuert, daß der thermische Abbruch der lebenden Kettenenden minimal ist. Um diesen Abbruch zu verringern, kann man den letzten Teil des Rohres mit einem Kühlmantel versehen.

Die Reaktion wird unter einem Druck durchgeführt, der hoch genug ist, um ein vorzeitiges Sieden des Gemisches zu vermeiden und um eine ausreichende Durchsatzgeschwindigkeit zu erzielen. Dies ist i.a. bei einem Druck von mehr als 5, vorzugsweise mehr als 20 bar der Fall.

Das erfindungsgemäße Verfahren arbeitet mit sehr hoher Raumzeitausbeute und liefert Produkte mit enger Molekulargewichtsverteilung. Die Molekulargewichtsverteilung der entstehenden Polymeren kann bei Bedarf durch Teilung der Initiatormenge und Zugabe der einzelnen Anteile an zwei oder mehr verschiedenen Stellen des Strömungsrohrs gesteuert, d.h. breiter eingestellt werden. So kann man sowohl Produkte mit breiter als auch solche mit bi- bzw. multimodaler Verteilung erhalten.

Nach Beendigung der Polymerisation werden die lebenden Kettenenden mit einer protonenaktiven Substanz, beispielsweise einem Alkohol, einer Säure oder einem Gemisch aus Kohlendioxid und Wasser abgebrochen. Anschließend wird die Polymerlösung nach bekanntem Verfahren von niedermolekularen Bestandteilen befreit und bei Bedarf mit Gleitmitteln, Antioxidantien etc. versehen.

Bevorzugt wird eine sog. Flashentgasung, wobei man die unter Druck stehende, hoch temperierte Polymerlösung in einen Entgaser entspannt und anschließend die vorentgaste Schmelze auf einem Extruder vom restlichen Lösungsmittel befreit.

### Beispiel 1

Als Reaktor wurde ein Strömungsrohr mit 40 m Länge und einem Durchmesser von 0,2 m verwendet. die ersten 2 m und die letzten 20 m waren mit Mischelementen ausgerüstet.

Am Eingang des Reaktors wurde eine Lösung von Styrol in Ethylbenzol mit einer Geschwindigkeit von 750 l/min eingespeist. Die Konzentration an Styrol betrug 32,5 %. Getrennt wurde an der gleichen Stelle eine 1,4·10⁻³ molare sec.-Butyllithiumlösung in Ethylbenzol zugeführt. Die Temperatur stieg im Verlauf von 100 sec von 40 auf 171°C. Der Umsatz betrug 100 %.

Die Raumzeitausbeute betrug 9360 kg/m³h.

### Beispiel 2

Beispiel 1 wurde wiederholt mit der Maßgabe, daß die Initiatoren im Verhältnis 1:1 aufgeteilt und die erste Hälfte am Eingang des Reaktors und die zweite Hälfte in der Mitte (d.h. nach 20 m Rohrlänge) eingespeist wurde.

Die Raumzeitausbeute betrug 8430 kg/m³h.

### Beispiel 3

Eine Mischung aus 16 Teilen Butadien und 84 Teilen Cyclohexan wurde über Aluminiumoxid getrocknet, auf 40°C vorgewärmt und anschließend mit einer Zulaufgeschwindigkeit von 1000 l/min in den Rohrreaktor eingespeist. Getrennt wurde ein Strom von sec.-Butyllithium mit einer Konzentration von 2,5·10⁻³ mol/l und einer Geschwindigkeit von 0,5 l/min zugeführt.

| | | |
|---|---|---|
| Endtemperatur | 146°C | |
| Molekulargewicht | | 136 000 |
| RZA | 7643 kg/m³h | |

### Beispiel 4

Wasserfreies, destilliertes Styrol (8 Teile), vorgereinigtes Butadien (16 Teile), getrocknetes Cyclohexan (64 Teile) und frisch destilliertes, getrocknetes Tetrahydrofuran (2 Teile) wurden gemischt, auf 35°C vorgewärmt und mit 500 l/min in den Rohrreaktor dosiert. Getrennt wurde sec.-Butyllithium mit einer Konzentration von 3,2·10⁻³ mol/l und einer Geschwindigkeit von 0,5 l/min zugeführt.

| | |
|---|---|
| Endtemperatur | 144°C |
| Molekulargewicht | 162 000 |
| RZA | 5732 kg/m³h |

## Patentansprüche

1. Kontinuierliches Verfahren zur anionischen Polymerisation von (co)polymerisierbaren Vinyl- bzw. Dien-Verbindungen, ausgewählt aus Styrol, α-Methylstyrol, Vinyltoluol, tert.-Butylstyrol und Butadien in Lösung und in einer als Strömungsrohr ausgebildeten Reaktionszone, die keine bewegten Teile enthält, unter Verwendung eines metallorganischen Initiators, dadurch gekennzeichnet, daß die Umsetzung im wesentlichen adiabatisch, d.h. ohne Wärmeaustausch mit der Umgebung vorgenommen und ein Druck gewählt wird, der ausreicht, um vorzeitiges Sieden des Gemisches zu vermeiden und eine ausreichende Durchsatzgeschwindigkeit zu erzielen und die Verweilzeit unter 5 Minuten liegt.

2. Verfahren nach Anspruch 1, dadurch gekennzeichnet, daß als Vinylverbindung Styrol eingesetzt wird.

3. Verfahren nach Anspruch 1, dadurch gekennzeichnet, daß als Initiator n- oder sec.-Butyllithium eingesetzt wird.

4. Verfahren nach Anspruch 1, dadurch gekennzeichnet, daß als Lösungsmittel Cyclohexan, Methylcyclohexan oder Ethylbenzol eingesetzt wird.

5. Verfahren nach Anspruch 1, dadurch gekennzeichnet, daß das Strömungsrohr wenigstens teilweise statische Mischer enthält.

## Claims

1. A continuous process for the anionic polymerization of (co)polymerizable vinyl or diene compounds selected from the group consisting of styrene, α-methylstyrene, vinyltoluene, tert-butylstyrene and butadiene in solution and in a reaction zone which is in the form of a flow tube and which contains no moving parts, using an organometallic initiator, wherein the reaction is carried out essentially adiabatically, ie. without heat exchange with the environment, and a pressure is selected which is sufficient to avoid premature boiling of the mixture and to achieve a sufficient throughput rate, and the residence time is less than 5 minutes.

2. A process as claimed in claim 1, wherein the vinyl compound used is styrene.

3. A process as claimed in claim 1, wherein the initiator used is n- or sec-butyllithium.

4. A process as claimed in claim 1, wherein the solvent used is cyclohexane, methylcyclohexane or ethylbenzene.

5. A process as claimed in claim 1, wherein the flow tube contains static mixers at least in parts.

## Revendications

1. Procédé en continu pour la polymérisation anionique de composés vinyliques respectivement diéniques (co)polymérisables choisis parmi le styrène, l'α-méthylstyrène, le vinyltoluène, le tert.-butylstyrène et le butadiène en solution et dans une zone réactionnelle réalisée sous forme d'un tube d'écoulement qui ne contient pas d'éléments mobiles, en utilisant un initiateur organométallique, caractérisé en ce qu'on procède à la mise en réaction dans des conditions essentiellement adiabatiques, c'est-à-dire sans échange thermique avec l'environnement et on sélectionne une pression qui suffit pour empêcher une ébullition prématurée du mélange et pour atteindre une vitesse de passage suffisante, le temps de séjour étant inférieur à 5 minutes.

2. Procédé selon la revendication 1, caractérisé en ce qu'on met en oeuvre le styrène à titre de composé vinylique.

3. Procédé selon la revendication 1, caractérisé en ce qu'on met en oeuvre le n- ou le sec.-butyllithium à titre d'initiateur.

4. Procédé selon la revendication 1, caractérisé en ce qu'on met en oeuvre, à titre de solvant, le cyclohexane, le méthylcyclohexane ou l'éthylbenzène.

5. Procédé selon la revendication 1, caractérisé en ce que le tube d'écoulement contient au moins en partie des mélangeurs statiques.
